(19) Europäisches Patentamt
European Patent Office
Office européen des brevets

(11) **EP 4 221 230 A1**

(12) **EUROPEAN PATENT APPLICATION**
published in accordance with Art. 153(4) EPC

(43) Date of publication:
**02.08.2023 Bulletin 2023/31**

(51) International Patent Classification (IPC):
**H04N 19/91** (2014.01)    **G06T 3/40** (2006.01)

(21) Application number: **20954638.1**

(52) Cooperative Patent Classification (CPC):
**G06T 3/40; H04N 19/91**

(22) Date of filing: **25.09.2020**

(86) International application number:
**PCT/CN2020/117942**

(87) International publication number:
**WO 2022/061786 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

• **WANG, Xiaohui**
**Dongguan, Guangdong 523860 (CN)**
• **LI, Ming**
**Dongguan, Guangdong 523860 (CN)**
• **WANG, Lu**
**Dongguan, Guangdong 523860 (CN)**
• **LIU, Qi**
**Dongguan, Guangdong 523860 (CN)**

(71) Applicant: **GUANGDONG OPPO MOBILE
TELECOMMUNICATIONS
CORP., LTD.
Dongguan, Guangdong 523860 (CN)**

(74) Representative: **Taor, Simon Edward William et al
Venner Shipley LLP
200 Aldersgate
London EC1A 4HD (GB)**

(72) Inventors:
• **YUAN, Hui**
**Dongguan, Guangdong 523860 (CN)**

(54) **POINT CLOUD CODING METHOD AND RELATED DEVICE**

(57) A point cloud encoding method and related apparatuses are provided. The method includes the following. For one or more points in a point cloud contained in the current coding block, an optimal prediction mode is determined by using a RDO mechanism, where a distortion parameter D in the RDO mechanism is determined according to a reconstruction distortion, the reconstruction distortion is determined when using a prediction mode for the one or more points, a bitrate parameter R in the RDO mechanism is determined according to a bitrate, and the bitrate is determined when using the prediction mode for the one or more points. A prediction value of the one or more points is obtained by predicting the one or more points using the optimal prediction mode. A residual of the one or more points is determined according to the prediction value of the one or more points. Encoding bits are obtained by encoding according to the optimal prediction mode and the residual, and the encoding bits are signaled into a bitstream. In this way, the PSNR performance of the encoder and the size of the color stream can be improved.

Step 201, obtain a current coding block by dividing a point cloud

Step 202, determine, for one or more points in a point cloud contained in the current coding block, an optimal prediction mode by using a rate-distortion optimization (RDO) mechanism

Step 203, obtain a prediction value of the one or more points by predicting the one or more points using the optimal prediction mode

Step 204, determine a residual of the one or more points according to the prediction value of the one or more points

Step 205, obtain encoding bits by encoding according to the optimal prediction mode and the residual, and signal the encoding bits into a bitstream

FIG. 2

**Description**

TECHNICAL FIELD

This disclosure relates to the field of image coding technology, and in particular to a point cloud encoding method and related apparatuses.

BACKGROUND

Rate-distortion optimization (RDO) is a method to improve compressed video quality. Rate-distortion refers to optimizing the amount of distortion (loss of video quality) against the amount of data (rate) required for video encoding. RDO is mainly used by video encoders for improving the quality in certain encoding situations (image, video, audio, etc.). Since the existing RDO mechanism does not consider the number of bits required to encode a quantized residual, the number of bits required for encoding the prediction mode cannot truly reflect a bitrate required for the current prediction mode. Moreover, the quantized residual cannot truly reflect a distortion parameter D of each prediction mode. Therefore, the improvement of quality of a reconstructed point cloud cannot be ensured.

SUMMARY

This disclosure provides a point cloud encoding method and related apparatuses, where a reconstruction distortion in a prediction mode is used as a distortion parameter D in the rate-distortion optimization (RDO), and the number of bits required for encoding the prediction mode and a quantized residual is used as a bitrate R in the RDO, which can improve peak signal-to-noise ratio (PSNR) performance of the encoder and improve (i.e. reduce) the size of a color bitstream.

In a first aspect, a point cloud encoding method is provided in implementations of the disclosure. The method includes the following. A current coding block is obtained by partitioning a point cloud. For one or more points in a point cloud contained in the current coding block, an optimal prediction mode is determined by using a RDO mechanism, where a distortion parameter D in the RDO mechanism is determined according to a reconstruction distortion, the reconstruction distortion is determined when using a prediction mode for the one or more points, a bitrate parameter R in the RDO mechanism is determined according to a bitrate, and the bitrate is determined when using the prediction mode for the one or more points. A prediction value of the one or more points is obtained by predicting the one or more points using the optimal prediction mode. A residual of the one or more points is determined according to the prediction value of the one or more points. Encoding bits are obtained by encoding according to the optimal prediction mode and the residual, and the encoding bits are signaled into a bitstream.

Compared with the related art, in the solution of the disclosure, the distortion parameter D in the RDO mechanism is set to the reconstruction distortion which is determined when using the prediction mode for the one or more points, and the bitrate parameter R is set to the bitrate which is determined when using the prediction mode for the one or more points, which can improve the PSNR performance of the encoder and the size of the color bitstream.

In a second aspect, a point cloud encoding apparatus is provided in implementations of the disclosure. The apparatus includes an obtaining unit, a partition unit, a first determining unit, a prediction unit, a second determining unit, and a signalling unit. The obtaining unit is configured to encode a bitstream and obtain a current coding block. The partition unit is configured to determine a current coding block by partitioning a point cloud. The first determining unit is configured to determine, for one or more points in a point cloud contained in the current coding block, an optimal prediction mode by using a RDO mechanism, where a distortion parameter D in the RDO mechanism is determined according to a reconstruction distortion, the reconstruction distortion is determined when using a prediction mode for the one or more points, a bitrate parameter R in the RDO mechanism is determined according to a bitrate, and the bitrate is determined when using the prediction mode for the one or more points. The prediction unit is configured to obtain a prediction value of the one or more points by predicting the one or more points using the optimal prediction mode. The second determining unit is configured to determine a residual of the one or more points according to the prediction value of the one or more points. The signalling unit is configured to obtain encoding bits by encoding according to the optimal prediction mode and the residual, and signal the encoding bits into a bitstream.

In a third aspect, an encoder is provided in implementations of the disclosure. The encoder includes a non-transitory storage medium storing an executable program and a central processing unit (CPU) coupled to the non-volatile storage medium. When the CPU executes the executable program, the encoder executes the method of the first aspect.

In a fourth aspect, a terminal is provided in implementations of the disclosure. The terminal includes one or more processors, a memory, and a communication interface, where the memory and the communication interface are coupled to the one or more processors. The terminal communicates with other devices through the communication interface. The memory is configured to store computer program codes including instructions. When the instructions are executed by the one or more processors, the terminal executes the method of the first aspect.

In a fifth aspect, a computer-readable storage medium is provided in implementations of the disclosure. The computer-readable storage medium includes instructions which, when executed by a computer, cause the computer to perform the method of the first aspect.

In a sixth aspect, a computer program product is provided in implementations of the disclosure. The computer program product includes instructions which, when executed by a computer, cause the computer to perform the method of the first aspect.

BRIEF DESCRIPTION OF THE DRAWINGS

In order to more clearly illustrate the technical solutions in implementations of the disclosure or the prior art, the following will briefly introduce the drawings required in the description of the implementations or the prior art. Obviously, the accompanying drawings in the following description are only some embodiments of the present invention. Those skilled in the art can also obtain other drawings based on these drawings without creative work.

FIG. 1 is a schematic diagram of an encoder framework provided in implementations of the disclosure.
FIG. 2 is a schematic flowchart of a point cloud encoding method in implementations of the disclosure.
FIG. 3 is a schematic diagram illustrating performance comparison of a point cloud encoding method in implementations of the disclosure.
FIG. 4a is a schematic structural diagram of a point cloud encoding apparatus in implementations of the disclosure.
FIG. 4b is a schematic block diagram of function units of a point cloud encoding apparatus in implementations of the disclosure.

DETAILED DESCRIPTION

In order to make the object, technical solution and advantages of the present disclosure clearer, the present disclosure will be further described in detail below in conjunction with the accompanying drawings and implementations. It should be understood that the specific implementations described here are only used to explain the present disclosure, not to limit the present disclosure.

It can be understood that the terms "first", "second" and the like used in the present disclosure may be used to describe various elements herein, but these elements are not limited by these terms. These terms are only used to distinguish one element from another. For example, a first client could be termed a second client, and, similarly, a second client could be termed a first client, without departing from the scope of the present disclosure. Both the first client and the second client are clients, but they are not the same client.

At present, a technology of calculating an optimal color prediction mode based on a quantized residual is used.

This technology is called rate-distortion optimization (RDO) mechanism for short, which is applied in a predicting transform mode in point cloud color coding and is an expression form of RDO. The RDO mechanism is mainly implemented as follows:

a) Calculate a maximum color difference maxDiff for a neighbouring point set of a current point, and compare maxDiff with a set threshold,

if maxDiff is less than the threshold, a prediction mode of a weighted average of color values of the neighbouring points is used;
otherwise, the RDO mechanism is used to select an optimal prediction mode for this point;

b) In the RDO mechanism, a cost score will be calculated for each prediction mode for the current point, and then a prediction mode with the lowest cost score, that is, an optimal prediction mode, will be selected as the color prediction mode for the current point.

Specifically, at first, the maximum color difference maxDiff for the neighbouring point set of the current point is calculated as follows.

First, calculate a maximum difference for the neighbouring points for component R, that is, MAX(R) - MIN(R), and calculate for component G and component B as well, and then select a maximum difference value among components R, G, and B as maxDiff, that is:

$$maxDiff = max(\ max(R1,R2,R3)\text{-}min(R1,R2,R3),\ max(G1,G2,G3)\text{-}min(G1,G2,G3),$$

$$max(B1,B2,B3)\text{-}min\ (B1,B2,B3)\ ).$$

Second, compare maxDiff with the threshold.

If maxDiff is less than the threshold, the prediction mode for the current point is set to 0, that is, predMode=0.

If maxDiff is greater than or equal to the threshold, the RDO mechanism is used for the current point. A color prediction value attrPred corresponding to each prediction mode is calculated, and subtraction is performed on a color value attrValue of the current point and the prediction value attrPred and the residual is quantized to obtain a quantized residual attrResidualQuant. A distortion parameter D in the RDO mechanism is a sum of three components of attrResidualQuant, namely:

$$D = attrResidualQuant[0] + attrResidualQuant[1] + attrResidualQuant[2]$$

Calculate the number of bits idxBits required for encoding each prediction mode, and the number of bits idxBits is used as the bitrate R in the RDO mechanism, that is, R = idxBits. Then a cost score of each prediction mode may be expressed as:

$$D + lambda \times R$$

where lambda = 0.01 $\times$ Qstep. The prediction mode with the lowest cost score is selected as the optimal prediction mode for the current point.

As can be seen, in the existing RDO mechanism, the quantized residual attrResidualQuant cannot truly reflect the distortion parameter D of each prediction mode, which therefore cannot ensure improvement of quality of the reconstructed point cloud. Additionally, the number of bits required for encoding the prediction mode cannot truly reflect the bitrate required by the current prediction mode, since the number of bits required for encoding the quantization residual is not taken into account.

In view of the above technical problems, implementations of the disclosure provide a RDO mechanism based on reconstruction distortion and quantized residual coding estimation. Specifically, in the RDO mechanism, the reconstruction distortion is used as the distortion parameter D, and the number of bits required for the zero-order exponential Golomb coding of the quantized residual is used as the bitrate R, and the lambda rate is modified.

Implementations of the disclosure will be described in detail below in conjunction with the accompanying drawings.

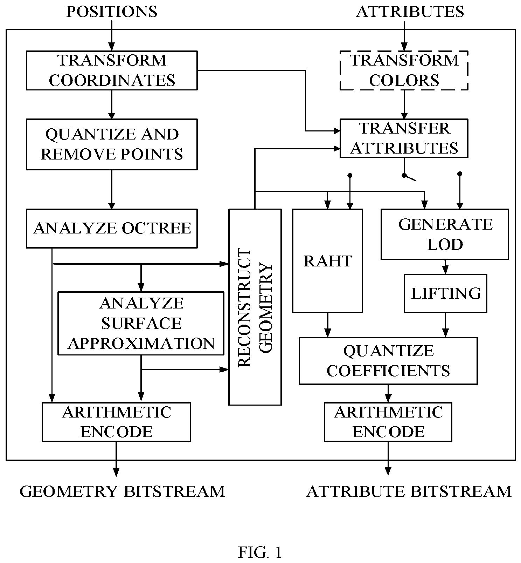

Referring to FIG. 1, FIG. 1 is a schematic diagram of an encoder framework provided in implementations of the disclosure. As illustrated in FIG. 1, during encoding of a point cloud, the point cloud is first converted from world coordinates into relative coordinates by processing position information with a coordinate conversion module (for example, Transform coordinates), where minimum values of x, y, and z coordinate axis are subtracted from geometric coordinates of a point respectively. Then, a geometric quantization and de-duplication point module (for example, Quantize and remove points) is used to remove duplicate points whose geometric coordinates are consistent after the geometric coordinates are quantized when the geometric losses occur. Then, the point cloud is partitioned step by step in a form of octree by an octree analysis module (for example, Analyze octree), so that positions of the points may be in one-to-one correspondence with positions in the octree, and the positions of the points in the octree are counted. Then, data obtained from the octree analysis module may be processed by an approximation surface analysis module (for example, Analyze surface approximation) and then input into an arithmetic encoding module (for example, Arithmetic encoder) for encoding to obtain a geometric bitstream. Or the data obtained from the octree analysis module may be directly input into the arithmetic encoding module, and the arithmetic encoding module generates geometric bitstream information from the previous information by using an arithmetic encoding method. The data from the octree analysis module or the approximation surface analysis module may then be input to a geometry information reconstruction module (e.g., Reconstruct geometry) for processing.

During encoding of attribute information, the attribute information is first converted from the RGB color space into a YUV space or other space through a color space converting module (for example, Transform color). Then, the attribute information is input into an attribute transfer module (Transfer attributes), where the module is configured to transfer attributes to a point cloud geometry, which has been compressed at the encoder before the attribute encoding and then is reconstructed. The data that has been processed by the geometry information reconstruction module may be input into the attribute transfer module or a region-adaptive hierarchical transformation module (e. g., RAHT) or a level-of-detail generation module (e. g., Generate LOD) for processing. For a certain type of data, the data may be encoded using the RAHT module, then a residual is quantized in a quantization step by using a Quantize coefficients module, and arithmetic encoding is performed on the encoded attribute information using an arithmetic encoding module, so as to finally obtain attribute bitstream information. For another type of data, the data may be first processed by the LOD generation module and a lifting module, and then arithmetic encoding is performed on the encoded attribute information using an arithmetic encoding module, so as to finally obtain attribute bitstream information, where the LOD generation module is used for generating a LOD according to Euclidean distances between points.

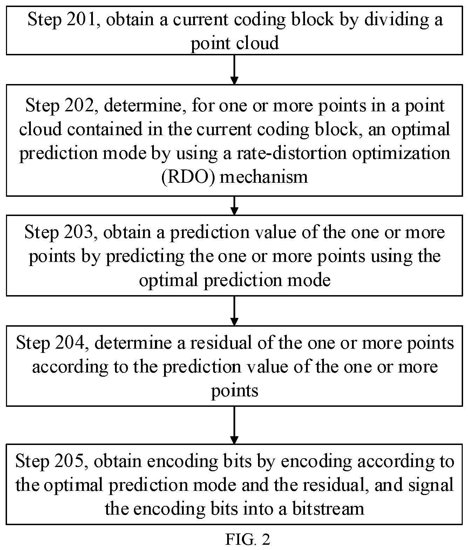

Referring to FIG. 2, FIG. 2 is a schematic flowchart of a point cloud encoding method in implementations of the disclosure. The point cloud encoding method may be applied to the encoder illustrated in FIG. 1. The processes illustrated in FIG. 2 are performed by the encoder illustrated in FIG. 1 for example. As illustrated in FIG. 2, the point cloud encoding method provided in implementations of the disclosure includes the following.

At block 201, a current coding block is determined by partitioning a point cloud.

Point cloud encoding may be block-based. For example, when encoding a video, a frame of the video is partitioned into different blocks, and then each block is encoded separately.

At block 202, for one or more points in a point cloud contained in the current coding block, an optimal prediction mode is determined by using a RDO mechanism, where a distortion parameter D in the RDO mechanism is determined according to a reconstruction distortion, the reconstruction distortion is determined when using a prediction mode for the one or more points, a bitrate parameter R in the RDO mechanism is determined according to a bitrate, and the bitrate is determined when using the prediction mode for the one or more points.

The coding block contains one or more points. An optimal prediction mode for each point needs to be determined by using the RDO mechanism. Optionally, a maximum difference in color for a neighbouring point set of the current point is calculated and then compared with a set threshold, the optimal prediction mode for the point with a maximum difference greater than the threshold is determined by using the RDO mechanism for the point. In a specific implementation, a maximum color difference maxDiff for a neighbouring point set of the current point may be first calculated as follows. First, a maximum difference among neighbouring points on component R is calculated, i.e. MAX (R) - MIN (R), and maximum differences on component G and B are calculated as well. Then the maximum difference value among the R, G and B components is selected as maxDiff, that is, maxDiff = max (max (R1, R2, R3)-min (R1, R2, R3), max (G1, G2, G3)-min (G1, G2, G3), max (B1, B2, B3)-min (B1, B2, B3)). The maxDiff is compared with a preset threshold. If the maximum color difference is greater than the preset threshold, the RDO mechanism is performed on the current point. The RDO technology mainly involves two aspects: distortion and bitrate. The distortion refers to the amount of quality loss, such as for an image or a video. The bitrate mainly refers to the number of bits required for encoding. The main idea of the RDO is that, when a cost function is calculated, restrictions on both bitrate and distortion are considered at the same time, in order to ensure a low bitrate as well as low distortion, which is more beneficial to data stream transmission.

At block 203, a prediction value of the one or more points is obtained by predicting the one or more points using the optimal prediction mode.

At block 204, a residual of the one or more points is determined according to the prediction value of the one or more points.

At block 205, encoding bits are obtained by encoding according to the optimal prediction mode and the residual, and the encoding bits are signaled into a bitstream.

The prediction value is obtained by predicting the point according to the optimal prediction mode determined by the RDO mechanism. The residual may be obtained by performing quantization on difference between a color value of the current point and a color prediction value of the current point.

As can be seen, in the implementation, the distortion parameter D in the RDO mechanism is determined according to the reconstruction distortion that is determined when using the prediction mode for the one or more points, the bitrate parameter R in the RDO mechanism is determined according to the bitrate that is determined when using the prediction mode for the one or more points, the prediction value and residual value are obtained through the RDO mechanism, and finally the encoding bits are obtained and signaled into the bitstream. In this way, the PSNR performance of the encoder and the size of the color bitstream can be improved.

In a possible example, the reconstruction distortion is generated from predictive encoding performed on the one or more points using the prediction mode.

In a possible example, the reconstruction distortion is a value estimated for a distortion using a distortion model, where the distortion is generated from predictive encoding performed on the one or more points using the prediction mode.

The reconstructed distortion may be the distortion obtained from the real encoding process, or may be an estimated value, for example, the estimated distortion based on the distortion model.

As can be seen, in this example, the reconstruction distortion parameter is a distortion generated from encoding or an estimated value obtained by model prediction, which can improve the PSNR performance of the encoder and the size of the color bitstream.

In a possible example, the bitrate is the number of bits required for predictive encoding of the one or more points using the prediction mode.

In a possible example, the bitrate is the number of bits required for encoding of a parameter indicating the prediction mode and encoding of a residual determined when predicting the one or more points using the prediction mode.

As can be seen, in this example, a sum of the number of bits required for encoding the prediction mode and the number of bits required for encoding the residual is determined as the bitrate, which can improve the PSNR performance of the encoder and the size of the color bitstream.

In a possible example, the optimal prediction mode for the one or more points in a point cloud contained in the current coding block is determined using the RDO mechanism as follows. A distortion parameter D for the one or more points is determined by using a prediction mode for the one or more points. A bitrate parameter R for the one or more points is determined by using the prediction mode for the one or more points. A cost score of the prediction mode is determined according to the distortion parameter D and the bitrate parameter R. A prediction mode with a lowest cost score is determined as the optimal prediction mode for the one or more points.

When the RDO mechanism-based prediction is performed on each point, multiple prediction modes will be used for each point at the same time. A cost score corresponding to each prediction mode will be obtained by calculation for each prediction mode, and finally the prediction mode with the lowest cost score may be determined as the optimal prediction mode for this point.

As can be seen, in this example, the prediction mode with the lowest cost score is taken as the optimal prediction mode, so that the optimal prediction mode can be obtained more accurately.

In a possible example, the distortion parameter D for the one or more points is determined by using the prediction mode for the one or more points as follows. A reconstructed value of the one or more points is determined by using the prediction mode for the one or more points. The reconstruction distortion of the one or more points is determined according to the reconstructed value and an original value of the one or more points. The distortion parameter D for the one or more points is determined according to the reconstructed distortion for the one or more points.

Each point may include three color components, that is, red (R), green (G) and blue (B), so the reconstruction value and the color value of the current point also specifically include values of the three components. Alternatively, only one color component may be included. After obtaining the reconstruction value of the point in a preset mode, for each of the three color component, the color value of the point is subtracted from the reconstruction value, and an absolute value of the difference is obtained. In this way, the reconstruction distortion of the point for each of the three color components is obtained respectively, and the distortion of the point in the prediction mode is obtained according to the three reconstruction distortions.

As can be seen, in this example, the distortion parameter D in the RDO mechanism is set to be equal to the reconstruction distortion determined when using the prediction mode for the one or more points, which can improve the PSNR performance of the encoder and the size of the color bitstream.

In a possible example, the reconstructed value of the one or more points is determined by using the prediction mode for the one or more points as follows. A prediction value of the one or more points is determined by using the prediction mode for the one or more points. The residual of the one or more points is determined according to the prediction value and the original value of the one or more points. A quantized value of the residual is determined. Inverse quantization is performed on the quantized value of the residual and the reconstructed value is obtained according to the prediction value.

During determination of the cost score, it is first necessary to dequantize the quantization residual for each prediction mode. That is, the RDO mechanism is first used to calculate the prediction value of the point in the prediction mode. Then the color value of the current point is subtracted from the calculated prediction value, and the difference is quantized to obtain the quantized residual. Then inverse quantization is performed on the quantized residual, so as to obtain the reconstruction value of the point in this prediction mode.

As can be seen, in this example, the quantized residual is dequantized, which is used to obtain the reconstructed value according to the predicted value. The distortion parameter D in the RDO mechanism is set to be equal to the reconstruction distortion determined by using the prediction mode for the one or more points. In this way, the PSNR performance of the encoder and the size of the color bitstream can be improved.

In a possible example, the reconstruction distortion is a reconstruction distortion of one color component, or the reconstruction distortion is a weighted sum of reconstruction distortions of a plurality of color components.

The reconstruction distortion of each color component may be taken as the reconstruction distortion, or the weighted sum of the reconstruction distortions of multiple color components may be taken as the reconstruction distortion. The reconstruction distortion can be calculated according to the following formula:

$$\text{reconstruction distortion} = \text{attrDistortion}[0] + \text{attrDistortion}[1] + \text{attrDistortion}[2],$$

where attrDistortion[0] is the reconstruction distortion value of the first color component among the three color components, attrDistortion[1] is the reconstruction distortion value of the second color component among the three color components, and attrDistortion[2] is the reconstruction distortion value of the third color component among the three color components.

As can be seen, in this example, the reconstruction distortion of one color component or the weighted sum of the reconstruction distortions of multiple color components can be used as the reconstruction distortion, which can improve the PSNR performance of the encoder and the size of the color bitstream.

In a possible example, the distortion parameter D for the one or more points is determined according to the reconstructed distortion for the one or more points as follows. The reconstructed distortion for the one or more points is determined as the distortion parameter D for the one or more points. Optionally, a square sum of the reconstructed distortion for the one or more points is determined as the distortion parameter D for the one or more points. Optionally, a mean square error (MSE) of the reconstructed distortion for the one or more points is determined as the distortion parameter D for the one or more points.

The reconstructed distortion may be determined directly as the distortion parameter D. Optionally, the distortion parameter D may be calculated according to the following formula:

$$D = attrDistortion[0]^2 + attrDistortion[1]^2 + attrDistortion[2]^2$$

where D is the value of the distortion parameter D, attrDistortion[0] is a value of the first reconstruction distortion among the three reconstruction distortions, attrDistortion[1] is a value of the second reconstruction distortion among the three reconstruction distortions, attrDistortion[2] is a value of the third reconstruction distortion of the three reconstruction distortions. Optionally, the MSE of the three reconstruction distortions may be calculated and used as the distortion parameter D of the point for the current prediction mode. MSE is a measure that reflects the degree of difference between the value to-be-estimated and the value estimated. MSE refers to an expected value of a squared difference between estimated values and actual values of a parameter. MSE can evaluate the degree of change in the data, where the smaller the value of MSE, the better the accuracy of the prediction model describing the experimental data.

As can be seen, in this example, the value of the reconstruction distortion, the square sum of the reconstruction distortion, or the MSE of the reconstruction distortion is taken as the distortion parameter D, which can improve the PSNR performance of the encoder and the size of the color bitstream.

In a possible example, the bitrate parameter R for the one or more points is determined by using the prediction mode for the one or more points as follows. A quantized value of the residual of the one or more points is determined by using the prediction mode for the one or more points. The first number of bits required for encoding the quantized value of the residual of the one or more points and the second number of bits required for encoding the prediction mode when the prediction mode is used is determined. The bitrate parameter R is determined according to the first number of bits and the second number of bits.

The value of the bitrate may be the sum of the first number of bits and the second number of bits.

As can be seen, in this example, the bitrate parameter R is determined according to the first number of bits and the second number of bits, which can obtain the value of the bitrate R more accurately and in line with actual operation, and improve the PSNR performance of the encoder and the size of the color bitstream.

In a possible example, the first number of bits is the number of bits required for encoding a quantized value of a residual for one color component; or the first number of bits is the sum of numbers of bits required for encoding quantized values of residuals for multiple color components.

The first number of bits may be the number of bits required for encoding quantized values of residuals for three color components R, G, and B.

As can be seen, in this example, the first number of bits may be the number of bits required for the quantized values of residuals for one color component or for multiple color components, which can obtain the value of bitrate R more accurately and in line with actual operation, and improve the SNR performance of the encoder and the size color bitstream.

In a possible example, the first number of bits is obtained by encoding using one or more of the following encoder: a zero-order exponential Columbus encoder, or an arithmetic encoder.

Zero-order exponential Columbus coding is a lossless data compression method, which is a type of variable-length coding and is composed of a prefix and a suffix. The hardware implementation for this coding is simple, and there is no need to establish and store a code table in advance, where codewords can be generated quickly through hardware calculations and the coding efficiency is high. Arithmetic coding is a lossless coding method, which can effectively compress the source redundancy. Arithmetic coding is a kind of entropy coding that has the characteristics of good real-time performance, high flexibility, and strong adaptability, and is widely used in image compressing, video coding and other fields.

As can be seen, in this example, the zero-order exponential Golomb coder or the arithmetic coder is used in predictive encoding to obtain the first number of bits, which can determine the number of bits required for encoding the reconstruction distortion more accurately, and can better improve the PSNR performance of the encoder and the size of the color bitstream.

In a possible example, the cost score of the prediction mode is determined according to the distortion parameter D and the bitrate parameter R as follows. The cost score is calculated according to a formula:

$$S = D + lambda \times R,$$

where S represents the cost score, D represents a value of the distortion parameter D, R represents a value of the bitrate parameter R, and lambda represents a preset coefficient.

The cost score can be used to measure the performance of the prediction mode. The smaller the cost score, the better the prediction mode. In this example, the cost score is the value of the distortion parameter D plus the value of the product of the preset coefficient and the bitrate R.

As can be seen, in this example, the cost score is calculated by adding the value of the distortion parameter D to the product of the preset coefficient and the bitrate R, so that the optimal prediction mode can be selected accurately, and the PSNR performance of the encoder and the size of the color bitstream can be improved.

In a possible example, lambda is calculated according to a formula:

$$lambda = \alpha \times Qstep,$$

where Qstep represents a quantization step for the one or more points in the point cloud contained in the current coding block, and $\alpha$ represents a preset value.

The quantization step may be designed according to factors such as characteristics of different images, subjective requirements of users, and the like.

As can be seen, in this example, the preset coefficients in the cost score is calculated through the quantization step, so that the optimal prediction mode can be selected accurately, and the PSNR performance of the encoder and the size of the color bitstream can be improved.

In a possible example, $\alpha$ is in a range of [0.01,1],

The value of $\alpha$ is variable, which can be arbitrarily selected from 0.01 to 1 according to actual needs.

As can be seen, the value of the preset coefficient is set between 0.11 and 1, so that the optimal prediction mode can be selected accurately, and the PSNR performance of the encoder and the size of the color bitstream can be improved.

In a possible example, $\alpha$ =0.11 or $\alpha$ =0.26.

When $\alpha$ is 0.11, lambda =0.11 $\times$ Qstep. When $\alpha$ is 0.26, lambda=0.26$\times$Qstep.

As can be seen, the preset coefficient is calculated as 0.11 $\times$ Qstep or 0.26$\times$Qstep, which can accurately select the optimal prediction mode and improve the PSNR performance of the encoder and the size of the color bitstream.

In a possible example, lambda is determined by: measuring performance of one or more lambda values corresponding to each Qp to be measured in one or more quantization parameters Qp; determining a lambda value with the best performance among the one or more lambda values corresponding to the Qp to be measured as an optimal lambda corresponding to the Qp to be measured; and determining a final lambda according to determined one or more optimal lambdas corresponding to the one or more quantization parameters Qp.

The lambda with the best performance among the multiple lambdas corresponding to each Qp value can be determined by full search, and the final lambda is determined according to multiple lambdas with the best performance corresponding to the multiple Qp. During encoding, different Qp values can be set for different bitrates according to the public test environment CTC. Multiple lambdas may be obtained corresponding to each QP value. Performance of the multiple lambdas can be compared to determine the optimal lambda corresponding to the QP value. The final lambda is selected from the optimal lambdas determined according to multiple Qp values respectively.

As can be seen, in this example, the final lambda is determined according to the quantization parameter QP, so that the optimal prediction mode can be accurately selected, and the PSNR performance of the encoder and the size of the color bitstream can be improved.

The following describes in detail in conjunction with specific implementations.

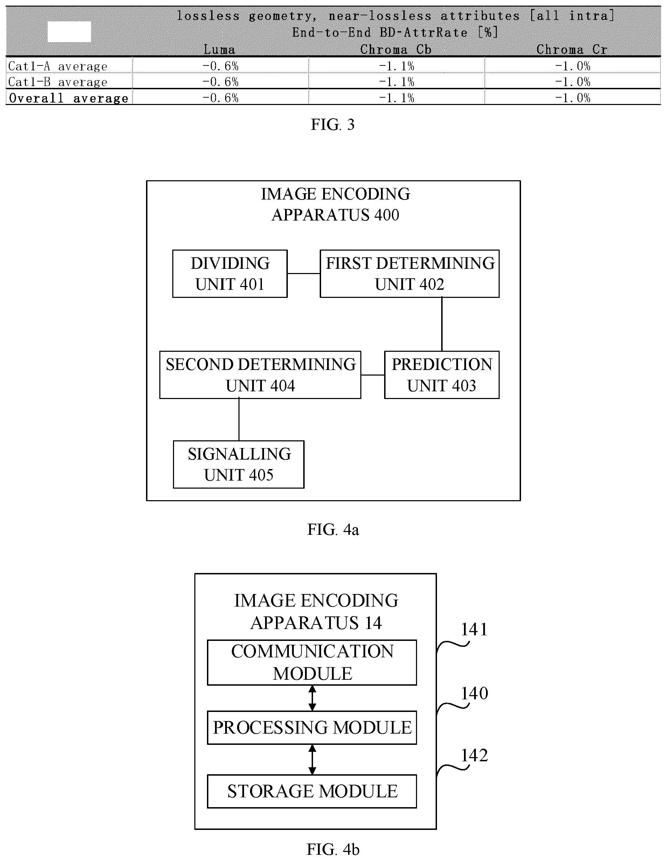

After the technical solution proposed in this disclosure is implemented on the geometry-based point cloud compression (G-PCC) reference software TMC13 V11.0, a part of testing sequences required by the Moving Picture Experts Group (MPEG) is tested under the CTC CY test conditions. As illustrated in FIG. 3, FIG. 3 is a schematic diagram illustrating performance comparison of the point cloud encoding method in implementations of the disclosure, where Luma represents a gain in the luminance component, Chroma Cb represents a gain in the chroma Cb component, and Chroma Cr represents a gain in the chroma Cb component. Reflectance represents a gain in the reflectivity property. Cat1-A contains low-precision static objects and scenes with position and color information, and Cat1-B contains high-precision static objects and scenes with position and color information. Cat1-A average represents an average gain for all sequences of Cat1-A type, Cat1-B average represents an average gain for all sequences of Cat1-B type, and overall average represents an average performance gain for all test sequences.

Implementations of the disclosure provides a point cloud encoding apparatus. The point cloud encoding apparatus provided in implementations of the disclosure may include modules corresponding to respective steps.

In implementations of the disclosure, the point cloud encoding apparatus may be partitioned into function modules according to the above method examples. For example, each function module may be corresponding to each function, or two or more functions may be integrated into one processing module. The above-mentioned integrated module may be implemented in the form of hardware or in the form of software function modules. The division of modules in the implementation of the disclosure is for illustration and only a logical function division, and there may be other division methods in practice.

In the case of the functional modules are corresponding to respective functions, FIG. 4a is a schematic structural diagram of a point cloud encoding apparatus in implementations of the disclosure. As illustrated in FIG. 4a, the point cloud encoding apparatus 400 includes a partition unit 401, a first determining unit 402, a prediction unit 403, a second determining unit 404, and a signaling unit 405.

The partition unit 401 is configured to determine a current coding block by partitioning a point cloud.

The first determining unit 402 is configured to determine, for one or more points in a point cloud contained in the current coding block, an optimal prediction mode by using a RDO mechanism, where a distortion parameter D in the RDO mechanism is determined according to a reconstruction distortion, the reconstruction distortion is determined when using a prediction mode for the one or more points, a bitrate parameter R in the RDO mechanism is determined according to a bitrate, and the bitrate is determined when using the prediction mode for the one or more points.

The prediction unit 403 is configured to obtain a prediction value of the one or more points by predicting the one or more points using the optimal prediction mode.

The second determining unit 404 is configured to determine a residual of the one or more points according to the prediction value of the one or more points.

The signalling unit 405 is configured to obtain encoding bits by encoding according to the optimal prediction mode and the residual, and signal the encoding bits into a bitstream.

In a possible example, the reconstruction distortion is generated from predictive encoding performed on the one or more points using the prediction mode.

In a possible example, the reconstruction distortion is a value estimated for a distortion using a distortion model, where the distortion is generated from predictive encoding performed on the one or more points using the prediction mode.

In a possible example, the bitrate is the number of bits required for predictive encoding of the one or more points using the prediction mode.

In a possible example, the bitrate is the number of bits required for encoding of a parameter indicating the prediction mode and encoding of a residual determined when predicting the one or more points using the prediction mode.

In a possible example, in terms of determining, for the one or more points in the point cloud contained in the current coding block, the optimal prediction mode by using the RDO mechanism, the first determining unit 402 is specifically configured to determine a distortion parameter D for the one or more points when using a prediction mode for the one or more points, determine a bitrate parameter R for the one or more points when using the prediction mode for the one or more points, determine a cost score of the prediction mode according to the distortion parameter D and the bitrate parameter R, and determine a prediction mode with a lowest cost score as the optimal prediction mode for the one or more points.

In a possible example, in terms of determining the distortion parameter D for the one or more points when using the prediction mode for the one or more points, the first determining unit 402 is specifically configured to determine a reconstructed value of the one or more points when using the prediction mode for the one or more points, determine the reconstruction distortion of the one or more points according to the reconstructed value and an original value of the one or more points, and determine the distortion parameter D for the one or more points according to the reconstructed distortion for the one or more points.

In a possible example, in terms of determining the reconstructed value of the one or more points when using the prediction mode for the one or more points, the first determining unit 402 is specifically configured to determine a prediction value of the one or more points by using the prediction mode for the one or more points, determine the residual of the one or more points according to the prediction value and the original value of the one or more points, determine a quantized value of the residual, and perform inverse quantization on the quantized value of the residual and obtaining the reconstructed value according to the prediction value.

In a possible example, the reconstruction distortion is a reconstruction distortion of one color component, or

the reconstruction distortion is a weighted sum of reconstruction distortions of a plurality of color components.

In a possible example, in terms of determining the distortion parameter D for the one or more points according to the reconstructed distortion for the one or more points, the first determining unit 402 is specifically configured to determine the reconstructed distortion for the one or more points as the distortion parameter D for the one or more points, determine a square sum of the reconstructed distortion for the one or more points as the distortion parameter D for the one or more points, or determine a mean square error (MSE) of the reconstructed distortion for the one or more points as the distortion parameter D for the one or more points.

In a possible example, in terms of determining the bitrate parameter R for the one or more points when using the prediction mode for the one or more points, the first determining unit 402 is specifically configured to determine a quantized value of the residual of the one or more points when using the prediction mode for the one or more points, determine a first number of bits required for encoding the quantized value of the residual of the one or more points and a second number of bits required for encoding the prediction mode when the prediction mode is used, and determine the bitrate parameter R according to the first number of bits and the second number of bits.

In a possible example, the first number of bits is the number of bits required for encoding a quantized value of a residual for one color component, or the first number of bits is a sum of numbers of bits required for encoding quantized values of residuals for multiple color components.

In a possible example, the first number of bits is obtained by encoding using one or more of a zero-order exponential Columbus encoder and an arithmetic encoder.

In a possible example, in terms of determining the cost score of the prediction mode according to the distortion parameter D and the bitrate parameter R, the first determining unit 402 is specifically configured to calculate the cost score according to a formula: $S = D + lambda \times R$, where S represents the cost score, D represents a value of the distortion parameter D, R represents a value of the bitrate parameter R, and lambda represents a preset coefficient.

In a possible example, lambda is calculated according to a formula: $lambda = \alpha \times Qstep$, where Qstep represents a quantization step for the one or more points in the point cloud contained in the current coding block, and $\alpha$ represents a preset value.

In a possible example, $\alpha$ is in a range of [0.01,1].

In a possible example, $\alpha$=0.11 or $\alpha$=0.26.

In a possible example, the preset coefficient lambda is determined by: measuring performance of one or more lambda values corresponding to each Qp to be measured in one or more quantization parameters Qp; determining a lambda value with the best performance among the one or more lambda values corresponding to the Qp to be measured as an optimal lambda corresponding to the Qp to be measured; and determining a final lambda according to determined one or more optimal lambdas corresponding to the one or more quantization parameters Qp.

All relevant content of each step involved in the above-mentioned method implementations can be incorporated to the function description of the corresponding function module, which will not be repeated herein. The point cloud encoding apparatus provided in the implementations of the disclosure includes but is not limited to the above-mentioned modules, for example, the point cloud encoding apparatus may further include a storage unit. The storage unit may be configured to store program codes and data of the point cloud encoding apparatus.

In the case of using an integrated unit, FIG. 4b illustrates a schematic structural diagram of the point cloud encoding apparatus provided in implementations of the disclosure. In FIG. 4b, the point cloud encoding apparatus 14 includes: a processing module 140 and a communication module 141. The processing module 140 is configured to control and manage the actions of the point cloud encoding apparatus, for example, execute the operations performed by the partition unit 401, the first determining unit 402, the prediction unit 403, the second determining unit 404, and the signalling unit 405, and/or other processes for performing the techniques described herein. The communication module 141 is configured to support the interaction between the point cloud encoding apparatus and other devices. As illustrated in FIG. 14, the point cloud encoding apparatus may further include a storage module 142 for storing program codes and data of the point cloud encoding apparatus, such as storing the content stored in the above storage unit 143.

The processing module 140 may be a processor or a controller, such as a central processing unit (CPU), a general purpose processor, a digital signal processor (DSP), ASIC, FPGA or other programmable logic device, transistor logic device, hardware component, or any combination thereof. The processing module 140 may implement or execute the various illustrative logical blocks, modules and circuits described in connection with the present disclosure. The processor may also be a combination of computing functions, for example, a combination of one or more microprocessors, a combination of DSP and a microprocessor, and so on. The communication module 141 may be a transceiver, an RF circuit, or a communication interface and the like. The storage module 142 may be a memory.

All relevant content of each scene involved in the above method implementations can be incorporated to the function description of the corresponding function module, and will not be repeated herein. The above-mentioned point cloud encoding apparatus 14 may execute the above-mentioned point cloud encoding method illustrated in FIG. 2, and the point cloud encoding apparatus 400 and the point cloud encoding apparatus 14 may specifically be video point cloud encoding apparatuses or other devices with video encoding functions.

The disclosure further provides an encoder, including a non-transitory storage medium and a central processing unit. The non-transitory storage medium stores an executable program, and the central processing unit is coupled to the non-transitory storage medium and executes the executable program to realize the point cloud encoding method in the implementations of the disclosure.

The disclosure further provides a terminal, which includes one or more processors, a memory, and a communication interface. The memory and the communication interface are coupled with the one or more processors. The memory is configured to store computer program codes including instructions, and when the one or more processors execute the instructions, the terminal executes the point cloud encoding method in the implementations of the disclosure. The terminal herein may be a video display device, a smart phone, a portable computer and other devices that can process or play video.

Another implementation of the disclosure further provides a computer-readable storage medium, where the computer-readable storage medium includes one or more program codes. The one or more programs include instructions, and when the processor in an encoding apparatus executes the program, the encoding apparatus executes the point cloud encoding method in the implementations of the disclosure.

Another implementation of the disclosure further provides a computer program product, where the computer program product includes computer-executable instructions stored in a computer-readable storage medium. At least one processor of an encoding apparatus can read from the computer the computer-executable instructions, and the at least one processor executes the computer-executable instructions to cause a terminal to implement the point cloud encoding method in the implementations of the disclosure.

All or part of the above implementations may be implemented by software, hardware, firmware or any combination thereof. When implemented by a software program, the implementation may appear in whole or in part in the form of a computer program product. The computer program product includes one or more computer instructions. When the computer program instructions are loaded and executed on the computer, the processes or functions according to the implementations of the disclosure will be generated in whole or in part.

The computer may be a general purpose computer, a special purpose computer, a computer network, or other programmable devices. The computer instructions may be stored in or transmitted from one computer-readable storage medium to another computer-readable storage medium, for example, the computer instructions may be transmitted from a website, computer, server or data center to another website site, computer, server or data center by wired (e.g. coaxial cable, fiber optic, digital subscriber line (DSL)) or wireless (e.g. infrared, wireless, microwave, etc.).

The computer-readable storage medium may be any available medium that can be accessed by a computer, or a data storage device such as a server or a data center integrated with one or more available mediums. The available medium may be a magnetic medium (for example, a floppy disk, a hard disk, or a magnetic tape), an optical medium (for example, a DVD), or a semiconductor medium (for example, a Solid State Disk (SSD)).

Through the description of the above implementations, those skilled in the art can clearly understand that for the convenience and brevity of the description, the division of the above-mentioned functional modules is used as only an example for illustration. In practical applications, the above-mentioned functions can be allocated to different functional modules according to needs, that is, the internal structure of the apparatus is partitioned into different functional modules to complete all or part of the functions described above.

In the several implementations provided in this disclosure, it should be understood that the disclosed apparatuses and methods may be implemented in other ways. For example, the apparatus implementations described above are only illustrative. For example, the division of the modules or units is only a logical function division. In actual implementation, there may be other division methods. For example, multiple units or components may be incorporated or integrated into another device, or some features may be omitted, or not implemented. In addition, the mutual coupling or direct coupling or communication connection illustrated or discussed may be through some interfaces, and the indirect coupling or communication connection of devices or units may be in electrical, mechanical or other forms.

The unit described as a separate component may or may not be physically separated, and the component displayed as a unit may be one physical unit or multiple physical units, that is, the unit may be located in one place, or may be distributed to multiple different places. Part or all of the units can be selected according to actual needs to achieve the purpose of the solution of this implementation.

In addition, functional units in each implementation of the disclosure may be integrated into one processing unit, each unit may exist separately physically, or two or more units may be integrated into one unit. The above-mentioned integrated units can be implemented in the form of hardware or in the form of software functional units.

If the integrated unit is realized in the form of a software function unit and sold or used as an independent product, it can be stored in a readable storage medium. Based on this understanding, the technical solution of the implementation of the disclosure is essentially or the part that contributes to the prior art, or all or part of the technical solution can be embodied in the form of a software product, and the software product is stored in a storage medium that includes several instructions to cause a device (which may be a single-chip microcomputer, a chip, etc.) or a processor to execute all or part of the steps of the methods described in the various implementations of the disclosure. The aforementioned storage medium includes U disk, mobile hard disk, read-only memory (ROM), random access memory (RAM), magnetic disk or optical disk and other various media that can store program codes.

The above are only specific implementations of the disclosure, but the protection scope of the disclosure is not limited thereto, and any changes or replacements within the technical scope disclosed in the disclosure should be covered within the protection scope of the disclosure. Therefore, the protection scope of the disclosure should be determined by the protection scope of the claims.

**Claims**

1. A method for point cloud encoding, comprising:

   determining a current coding block by partitioning a point cloud;
   determining, for one or more points in a point cloud contained in the current coding block, an optimal prediction mode by using a rate-distortion optimization (RDO) mechanism, wherein a distortion parameter D in the RDO mechanism is determined according to a reconstruction distortion, the reconstruction distortion is determined when using a prediction mode for the one or more points, a bitrate parameter R in the RDO mechanism is determined according to a bitrate, and the bitrate is determined when using the prediction mode for the one or more points;
   obtaining a prediction value of the one or more points by predicting the one or more points using the optimal prediction mode;
   determining a residual of the one or more points according to the prediction value of the one or more points; and
   obtaining encoding bits by encoding according to the optimal prediction mode and the residual, and signalling the encoding bits into a bitstream.

2. The method of claim 1, wherein the reconstruction distortion is generated from predictive encoding performed on the one or more points using the prediction mode.

3. The method of claim 1, wherein the reconstruction distortion is a value estimated for a distortion using a distortion model, wherein the distortion is generated from predictive encoding performed on the one or more points using the prediction mode.

4. The method of claim 1 or 2, wherein the bitrate is a number of bits required for predictive encoding of the one or more points using the prediction mode.

5. The method of claim 1 or 2, wherein the bitrate is a number of bits required for encoding of a parameter indicating the prediction mode and encoding of a residual determined when predicting the one or more points using the prediction mode.

6. The method of any of claims 1-5, wherein determining, for the one or more points in the point cloud contained in the current coding block, the optimal prediction mode by using the RDO mechanism comprises:

   determining a distortion parameter D for the one or more points when using a prediction mode for the one or more points;
   determining a bitrate parameter R for the one or more points when using the prediction mode for the one or more points;
   determining a cost score of the prediction mode according to the distortion parameter D and the bitrate parameter R; and
   determining a prediction mode with a lowest cost score as the optimal prediction mode for the one or more points.

7. The method of claim 6, wherein determining the distortion parameter D for the one or more points when using the prediction mode for the one or more points comprises:

   determining a reconstructed value of the one or more points when using the prediction mode for the one or more points;
   determining the reconstruction distortion of the one or more points according to the reconstructed value and an original value of the one or more points;
   determining the distortion parameter D for the one or more points according to the reconstruction distortion for

the one or more points.

8. The method of claim 7, wherein determining the reconstructed value of the one or more points when using the prediction mode for the one or more points comprises:

determining a prediction value of the one or more points by using the prediction mode for the one or more points;
determining the residual of the one or more points according to the prediction value and the original value of the one or more points;
determining a quantized value of the residual; and
performing inverse quantization on the quantized value of the residual and obtaining the reconstructed value according to the prediction value.

9. The method of claim 7, wherein

the reconstruction distortion is a reconstruction distortion of one color component; or
the reconstruction distortion is a weighted sum of reconstruction distortions of a plurality of color components.

10. The method of claim 9, wherein determining the distortion parameter D for the one or more points according to the reconstructed distortion for the one or more points comprising:

determining the reconstructed distortion for the one or more points as the distortion parameter D for the one or more points;
determining a square sum of the reconstructed distortion for the one or more points as the distortion parameter D for the one or more points; or
determining a mean square error (MSE) of the reconstructed distortion for the one or more points as the distortion parameter D for the one or more points.

11. The method of claim 6, wherein determining the bitrate parameter R for the one or more points when using the prediction mode for the one or more points comprises:

determining a quantized value of the residual of the one or more points when using the prediction mode for the one or more points;
determining a first number of bits required for encoding the quantized value of the residual of the one or more points and a second number of bits required for encoding the prediction mode when the prediction mode is used; and
determining the bitrate parameter R according to the first number of bits and the second number of bits.

12. The method of claim 11, wherein

the first number of bits is a number of bits required for encoding a quantized value of a residual for one color component; or
the first number of bits is a sum of numbers of bits required for encoding quantized values of residuals for a plurality of color components.

13. The method of claim 12, wherein the first number of bits is obtained by encoding using one or more of the following encoder:
a zero-order exponential Columbus encoder, or an arithmetic encoder.

14. The method of claim 6, wherein determining the cost score of the prediction mode according to the distortion parameter D and the bitrate parameter R comprises:

calculating the cost score according to a formula:

$$S = D + lambda \times R,$$

wherein S represents the cost score, D represents a value of the distortion parameter D, R represents a value of the bitrate parameter R, and lambda represents a preset coefficient.

**15.** The method of claim 14, wherein lambda is calculated according to a formula:

$$\text{lambda} = \alpha \times \text{Qstep},$$

wherein Qstep represents a quantization step for the one or more points in the point cloud contained in the current coding block, and $\alpha$ represents a preset value.

**16.** The method of claim 15, wherein $\alpha$ is in a range of [0.01,1].

**17.** The method of claim 15, wherein $\alpha$ =0.11 or $\alpha$ =0.26.

**18.** The method of claim 14, wherein the preset coefficient lambda is determined by:

measuring performance of one or more lambda values corresponding to each Qp to be measured in one or more quantization parameters Qp;
determining a lambda value with the best performance among the one or more lambda values corresponding to the Qp to be measured as an optimal lambda corresponding to the Qp to be measured; and
determining a final lambda according to determined one or more optimal lambdas corresponding to the one or more quantization parameters Qp.

**19.** A point cloud encoding apparatus, comprising:

a partition unit configured to determine a current coding block by partitioning a point cloud;
a first determining unit configured to determine, for one or more points in a point cloud contained in the current coding block, an optimal prediction mode by using a rate-distortion optimization (RDO) mechanism, wherein a distortion parameter D in the RDO mechanism is determined according to a reconstruction distortion, the reconstruction distortion is determined when using a prediction mode for the one or more points, a bitrate parameter R in the RDO mechanism is determined according to a bitrate, and the bitrate is determined when using the prediction mode for the one or more points;
a prediction unit configured to obtain a prediction value of the one or more points by predicting the one or more points using the optimal prediction mode;
a second determining unit configured to determine a residual of the one or more points according to the prediction value of the one or more points; and
a signalling unit configured to obtain encoding bits by encoding according to the optimal prediction mode and the residual, and signal the encoding bits into a bitstream.

**20.** An encoder, comprising a non-transitory storage medium storing an executable program and a central processing unit (CPU) coupled to the non-volatile storage medium, wherein when the CPU executes the executable program, the encoder executes the method of any of claims 1-18.

**21.** A terminal, comprising one or more processors, a memory, and a communication interface, wherein the memory and the communication interface are coupled to the one or more processors, the terminal communicates with other devices through the communication interface, and the memory is configured to store computer program codes including instructions, wherein when the instructions are executed by the one or more processors, the terminal executes the method of any of claims 1-18.

**22.** A computer program product comprising instructions, when running on a terminal, the computer program product causing the terminal to execute the method of any of claims 1-18.

**23.** A computer-readable storage medium, comprising instructions which, when running on a terminal, cause the terminal to execute the method of any of claims 1-18.

POSITIONS ATTRIBUTES

FIG. 1

GEOMETRY BITSTREAM          ATTRIBUTE BITSTREAM

Step 201, obtain a current coding block by dividing a point cloud

↓

Step 202, determine, for one or more points in a point cloud contained in the current coding block, an optimal prediction mode by using a rate-distortion optimization (RDO) mechanism

↓

Step 203, obtain a prediction value of the one or more points by predicting the one or more points using the optimal prediction mode

↓

Step 204, determine a residual of the one or more points according to the prediction value of the one or more points

↓

Step 205, obtain encoding bits by encoding according to the optimal prediction mode and the residual, and signal the encoding bits into a bitstream

FIG. 2

| | lossless geometry, near-lossless attributes [all intra] End-to-End BD-AttrRate [%] | | |
|---|---|---|---|
| | Luma | Chroma Cb | Chroma Cr |
| Cat1-A average | -0.6% | -1.1% | -1.0% |
| Cat1-B average | -0.6% | -1.1% | -1.0% |
| Overall average | -0.6% | -1.1% | -1.0% |

FIG. 3

IMAGE ENCODING
APPARATUS 400

DIVIDING
UNIT 401

FIRST DETERMINING
UNIT 402

SECOND DETERMINING
UNIT 404

PREDICTION
UNIT 403

SIGNALLING
UNIT 405

FIG. 4a

IMAGE ENCODING
APPARATUS 14

COMMUNICATION
MODULE

141

140

PROCESSING MODULE

STORAGE MODULE

142

FIG. 4b

## INTERNATIONAL SEARCH REPORT

| International application No. |
| --- |
| **PCT/CN2020/117942** |

| **A.** | **CLASSIFICATION OF SUBJECT MATTER** |
| --- | --- |

H04N 19/91(2014.01)i; G06T 3/40(2006.01)i

According to International Patent Classification (IPC) or to both national classification and IPC

| **B.** | **FIELDS SEARCHED** |
| --- | --- |

Minimum documentation searched (classification system followed by classification symbols)

H04N; G06T

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 点云, 编码, 解码, 压缩, 解压, 预测, 模式, 重建, 重构, 失真, 码率, 率失真, point, cloud, +cod+, +compress+, predict+, mode, reconstruct+, distortion, rate, RDO

| **C.** | **DOCUMENTS CONSIDERED TO BE RELEVANT** | | |
| --- | --- | --- | --- |
| Category* | Citation of document, with indication, where appropriate, of the relevant passages | | Relevant to claim No. |
| Y | CN 108235018 A (PEKING UNIVERSITY) 29 June 2018 (2018-06-29) description paragraphs 0054-0088 | | 1-23 |
| Y | CN 111145090 A (PENG CHENG LABORATORY et al.) 12 May 2020 (2020-05-12) description, paragraphs 0035-0056, 0082 | | 1-23 |
| Y | CN 111242997 A (PEKING UNIVERSITY SHENZHEN GRADUATE SCHOOL) 05 June 2020 (2020-06-05) description paragraphs 0025-0094 | | 1-23 |
| Y | CN 110572655 A (PEKING UNIVERSITY SHENZHEN GRADUATE SCHOOL) 13 December 2019 (2019-12-13) description, paragraphs 0008-0029 | | 1-23 |
| A | CN 111095929 A (APPLE INC.) 01 May 2020 (2020-05-01) entire document | | 1-23 |
| A | WO 2020190413 A1 (INTERDIGITAL VC HOLDINGS, INC.) 24 September 2020 (2020-09-24) entire document | | 1-23 |
| A | US 2020090374 A1 (SONY CORPORATION) 19 March 2020 (2020-03-19) entire document | | 1-23 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 April 2021** | **23 June 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/117942**

| Patent document cited in search report | | | Publication date (day/month/year) | Patent family member(s) | | | Publication date (day/month/year) |
|---|---|---|---|---|---|---|---|
| CN | 108235018 | A | 29 June 2018 | WO | 2019114024 | A1 | 20 June 2019 |
|    |           |   |              | CN | 108235018   | B  | 27 December 2019 |
| CN | 111145090 | A | 12 May 2020 | | None | | |
| CN | 111242997 | A | 05 June 2020 | | None | | |
| CN | 110572655 | A | 13 December 2019 | | None | | |
| CN | 111095929 | A | 01 May 2020 | DE | 112018005149 | T5 | 10 September 2020 |
|    |           |   |             | US | 2019080483 | A1 | 14 March 2019 |
|    |           |   |             | WO | 2019055772 | A1 | 21 March 2019 |
|    |           |   |             | US | 10861196   | B2 | 08 December 2020 |
|    |           |   |             | KR | 20200039757 | A | 16 April 2020 |
| WO | 2020190413 | A1 | 24 September 2020 | WO | 2020190375 | A1 | 24 September 2020 |
| US | 2020090374 | A1 | 19 March 2020 | WO | 2020053688 | A1 | 19 March 2020 |
|    |            |    |               | US | 10878597   | B2 | 29 December 2020 |

Form PCT/ISA/210 (patent family annex) (January 2015)